# EUROPÄISCHE PATENTSCHRIFT

(11) **EP 3 744 048 B1**
(45) Veröffentlichungstag und Bekanntmachung des Hinweises auf die Patenterteilung: **29.07.2026**
(21) Anmeldenummer: 18826044.2
(22) Anmeldetag: 20.12.2018
(51) Int. Cl.: H04L 12/40, H04L 25/02

(54) **TEILNEHMERSTATION FÜR EIN SERIELLES BUSSYSTEM UND VERFAHREN ZUM SENDEN EINER NACHRICHT IN EINEM SERIELLEN BUSSYSTEM**
PARTICIPANT STATION FOR A SERIAL BUS SYSTEM, AND METHOD FOR TRANSMITTING A MESSAGE IN A SERIAL BUS SYSTEM
STATION D'ABONNÉ POUR UN SYSTÈME DE BUS SÉRIE ET PROCÉDÉ POUR ENVOYER UN MESSAGE DANS UN SYSTÈME DE BUS SÉRIE

(30) Priorität: 22.12.2017 DE 102017223770; 13.02.2018 DE 102018202165
(43) Veröffentlichungstag der Anmeldung: 02.12.2020
(73) Patentinhaber: Robert Bosch GmbH, 70442 Stuttgart (DE)
(72) Erfinder: WALKER, Steffen, 72770 Reutlingen (DE); MUTTER, Arthur, 73765 Neuhausen (DE)
(86) Internationale Anmeldenummer: PCT/EP2018/086336
(87) Internationale Veröffentlichungsnummer: WO 2019/122208

(56) Entgegenhaltungen:
- US-A1- 2013 294 460
- US-A1- 2014 330 996
- ROBERT BOSCH GMBH: "CAN with Flexible Data-Rate Specification Version 1.0", 17 April 2012 (2012-04-17), Gerlingen, Germany, XP055047460, Retrieved from the Internet <URL:http://can-newsletter.org/assets/files/ttmedia/raw/e5740b7b5781b8960f55efcc2b93edf8.pdf> [retrieved on 20121211]

## Beschreibung

### Technisches Gebiet

Die vorliegende Erfindung betrifft eine Teilnehmerstation für ein serielles Bussystem und ein Verfahren zum Senden einer Nachricht in einem seriellen Bussystem, das mit hoher Datenrate und großer Fehlerrobustheit arbeitet.

### Stand der Technik

Für die Kommunikation zwischen Sensoren und Steuergeräten, beispielsweise in Fahrzeugen, wird häufig ein Bussystem eingesetzt, in welchem Daten als Nachrichten im Standard ISO11898-I:2015 als CAN Protokoll-Spezifikation mit CAN FD übertragen werden. Die Nachrichten werden zwischen den Busteilnehmern des Bussystems, wie Sensor, Steuergerät, Geber, usw., übertragen, wie beispielsweise in der DE 10 2012 214 849 A1 beschrieben, bei der Kommunikationsknoten in einer ersten, "normalen" Betriebsart und in einer zweiten Stromsparbetriebsart arbeiten sowie Transferknoten in einer ersten Betriebsart zwei Busse kommunikativ koppeln können und in einer zweiten Betriebsart kommunikativ trennen können.

WO 00/18064 A1 beschreibt ein Netzwerk sowie ein Koppelgerät zur Verbindung zweier Segmente in einem derartigen Netzwerk.

Mit steigender Anzahl an Funktionen einer technischen Anlage bzw. eines Fahrzeugs, nimmt auch der Datenverkehr im Bussystem zu. Noch dazu ist es oft gefordert, dass die Daten schneller vom Sender zum Empfänger zu übertragen sind als bisher. Folge davon ist, dass die geforderte Bandbreite des Bussystems weiter steigen wird.

Um Daten mit höherer Bitrate übertragen zu können als bei CAN, wurde im CAN FD Nachrichten- Format eine Option zur Umschaltung auf eine höhere Bitrate innerhalb einer Nachricht geschaffen. Bei solchen Techniken wird die maximal mögliche Datenrate durch Einsatz einer höheren Taktung im Bereich der Datenfelder über einen Wert von 1 MBit/s hinaus gesteigert. Solche Nachrichten werden nachfolgend auch als CAN FD-Rahmen oder CAN FD-Nachrichten bezeichnet. Bei CAN FD ist die Nutzdatenlänge von 8 auf bis zu 64 Bytes erweitert und sind die Datenübertragungsraten deutlich höher als bei CAN.

Auch wenn ein CAN oder CAN FD basiertes Kommunikationsnetzwerk im Hinblick auf beispielsweise seine Robustheit sehr viele Vorteile bietet, hat es doch eine deutlich geringere Schnelligkeit im Vergleich zu einer Datenübertragung bei zum Beispiel 100 Base-TI Ethernet. Außerdem ist die bisher mit CAN FD erreichte Nutzdatenlänge von bis zu 64 Bytes für einige Anwendungen zu gering.

US 2013/0294460 A1 und US 2014/0330996 A1 zeigen jeweils eine Modifikation von CAN FD, bei welcher in der Datenphase beide unterschiedlichen Buszustände getrieben werden. Bei der US 2013/0294460 A1 können vier verschiedene Buszustände getrieben werden. Drei der vier Buszustände sind symmetrisch zueinander erzeugt, ***wobei in der Arbitrationsphase ein Buszustand getrieben (dominant) wird, jedoch der andere Buszustand (rezessiv) nicht getrieben wird,* so *dass sich für den anderen Buszustand eine Differenzspannung von 0 V ergibt, wie bei CAN FD*** üblich.

### Offenbarung der Erfindung

Daher ist es Aufgabe der vorliegenden Erfindung, eine Teilnehmerstation für ein serielles Bussystem und ein Verfahren zum Senden einer Nachricht in einem seriellen Bussystem bereitzustellen, welche die zuvor genannten Probleme lösen. Insbesondere sollen eine Teilnehmerstation für ein serielles Bussystem und ein Verfahren zum Senden einer Nachricht in einem seriellen Bussystem bereitgestellt werden, bei welchen bei großer Fehlerrobustheit eine hohe Datenrate und eine Steigerung der Menge der Nutzdaten pro Rahmen realisiert werden kann.

Die Aufgabe wird durch eine Teilnehmerstation für ein serielles Bussystem mit den Merkmalen des Anspruchs 1 gelöst. Die Teilnehmerstation umfasst eine einer Sendestufe zum Senden einer Nachricht auf eine Busleitung des Bussystems, wobei die Sendestufe beim Senden von verschiedenen Phasen einer Nachricht ausgestaltet ist, zwischen einer ersten Betriebsart und einer zweiten Betriebsart zu schalten, wobei die Sendestufe in der ersten Betriebsart ausgestaltet ist, einen ersten Datenzustand als Buszustand mit unterschiedlichen Buspegeln für zwei Busadern der Busleitung zu erzeugen und einen zweiten Datenzustand als Buszustand mit demselben Buspegel für die zwei Busadern der Busleitung zu erzeugen, und wobei die Sendestufe in der zweiten Betriebsart ausgestaltet ist, den ersten und zweiten Datenzustand jeweils als Buszustand mit unterschiedlichen Buspegeln für die zwei Busadern der Busleitung zu erzeugen, wie in Anspruch 1 beschrieben.

Mit der Teilnehmerstation ist eine deutliche Steigerung der Bitrate und damit der Übertragungsgeschwindigkeit von Sender zu Empfänger realisierbar. Hierbei ist jedoch gleichzeitig eine große Fehlerrobustheit gewährleistet.

Aufgrund der Ausgestaltung der Teilnehmerstation werden keine Fehlerrahmen (Error- Frames) mehr benötigt. Dies trägt mit dazu bei, eine Nettodatenrate von mindestens 10 Mbps zu realisieren. Noch dazu kann die Größe der Nutzdaten bis zu 4096 Byte pro Rahmen betragen.

Ein weiterer Vorteil besteht darin, dass mehrere Domänen per Switches bedarfsgerecht miteinander verbunden werden. Das senkt den Verkabelungsaufwand zwischen den einzelnen Komponenten einer technischen Anlage bzw. eines Fahrzeugs. Dies ist in Bezug auf den geringeren zeitlichen Aufwand, verminderten Materialeinsatz und dadurch reduziertes Gewicht insbesondere bei einem Fahrzeug ein besonders deutlicher Pluspunkt.

Das von der Teilnehmerstation durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Teilnehmerstation sind in den abhängigen Ansprüchen angegeben.

Gemäß einer speziellen Ausführungsvariante ist die Sendestufe ausgestaltet, in die erste Betriebsart zu schalten, wenn von der Nachricht Daten einer ersten Phase zu senden sind, die mit einer ersten Bitrate zu senden sind, und in die zweite Betriebsart zu schalten, wenn von der Nachricht Daten einer zweiten Phase zu senden sind, die mit einer zweiten Bitrate zu senden ist, die schneller als die erste Bitrate ist

Gemäß einer weiteren speziellen Ausführungsvariante ist die Sendestufe ausgestaltet, nur in die zweite Betriebsart zum Senden von Daten zu schalten, wenn für die Teilnehmerstation für eine vorbestimmte Zeit ein exklusiver, kollisionsfreier Zugriff auf die Busleitung des Bussystems gewährleistet ist. Bei einem Ausführungsbeispiel hat die Sendestufe eine erste Endstufe, die zwischen einen Anschluss für eine Spannungsversorgung und eine erste Busader der Busleitung geschaltet ist, eine zweite Endstufe, die zwischen eine zweite Busader der Busleitung und einen Anschluss für Masse geschaltet ist, eine dritte Endstufe, die zwischen die erste Busader der Busleitung und einen Anschluss für Masse geschaltet ist, eine vierte Endstufe, die zwischen den Anschluss für die Spannungsversorgung und die zweite Busader der Busleitung geschaltet ist, und eine Schalteinrichtung zum aktiv Schalten nur der ersten und zweiten Endstufe oder zum aktiv Schalten der ersten bis vierten Endstufe.

Denkbar ist, dass die erste und vierte Endstufe einen PMOS-Transistor aufweisen, und die zweite und dritte Endstufe einen NMOS-Transistor aufweisen.

Möglicherweise ist die Sendestufe ausgestaltet, für die erste Betriebsart nur die erste und zweite Endstufe aktiv zu schalten, und für die zweite Betriebsart die erste und zweite Endstufe abwechselnd zu der dritten und vierten Endstufe aktiv zu schalten.

Gemäß einem weiteren Ausführungsbeispiel hat die Sendestufe einen Anschluss für ein Sendesignal einer Kommunikationssteuereinrichtung der Teilnehmerstation, und kann die Schalteinrichtung aufweisen: einen Schalter, der zwischen dem Anschluss und der dritten Endstufe angeschlossen ist, um das Sendesignal auf einen Gateanschluss eines Transistors der dritten Endstufe zu schalten oder von dem Gateanschluss zu trennen, und einen Schalter, der zwischen dem Anschluss und der vierten Endstufe angeschlossen ist, um das Sendesignal auf einen Gateanschluss eines Transistors der vierten Endstufe zu schalten oder von dem Gateanschluss zu trennen.

Es ist möglich, dass die Nachricht ein Datenfeld mit einer variablen Länge aufweist, wobei die variable Länge zwischen 1 Byte bis 4096 Bytes beträgt. Möglicherweise ist die Sendestufe ausgestaltet, die Buspegel in der ersten Betriebsart mit einem ersten Buslastwiderstand zu erzeugen und die Buspegel in der zweiten Betriebsart mit einem zweiten Buslastwiderstand zu erzeugen, wobei der erste Buslastwiderstand kleiner als der zweite Buslastwiderstand ist.

Die zuvor beschriebene Teilnehmerstation kann Teil eines Bussystems sein, das zudem eine parallele Busleitung und mindestens zwei Teilnehmerstationen umfasst, welche über die Busleitung derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zum Senden einer Nachricht in einem seriellen Bussystem nach Anspruch 13 gelöst. Das Verfahren hat den Schritt: Senden, mit einer Sendestufe einer Teilnehmerstation des Bussystems, einer Nachricht auf eine Busleitung des Bussystems, wobei die Sendestufe zwischen einer ersten Betriebsart und einer zweiten Betriebsart schaltet, um das Senden von verschiedenen Phasen einer Nachricht auszuführen, wobei die Sendestufe in der ersten Betriebsart einen ersten Datenzustand als Buszustand mit unterschiedlichen Buspegeln für zwei Busadern der Busleitung erzeugt und einen zweiten Datenzustand als Buszustand mit demselben Buspegel für die zwei Busadern der Busleitung erzeugt, und wobei die Sendestufe in der zweiten Betriebsart den ersten und zweiten Datenzustand jeweils als Buszustand mit unterschiedlichen Buspegeln für die zwei Busadern der Busleitung erzeugt, wie in Anspruch 13 beschrieben.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 ein Schaltbild einer Sendestufe einer Teilnehmerstation des Bussystems gemäß dem ersten Ausführungsbeispiel;
Fig. 4 eine Darstellung eines Beispiels für einen zeitlichen Spannungsverlauf von differenziellen Bussignalen CAN_H und CAN_L, die von der Sendestufe gemäß dem ersten Ausführungsbeispiel für einen Teil einer Nachricht generiert werden;
Fig. 5 eine Darstellung eines Beispiels für einen zeitlichen Spannungsverlauf von Bussignalen nach einer Umschaltung der Sendestufe gemäß dem ersten Ausführungsbeispiel in eine schnellere Datenübertragungsbetriebsart als bei Fig. 4;
Fig. 6 eine Darstellung eines Beispiels für einen zeitlichen Spannungsverlauf der Bussignale CAN_H und CAN_L für einen Teil einer Nachricht bei einem zweiten Ausführungsbeispiel;
Fig. 7 ein Schaltbild einer Sendestufe einer Teilnehmerstation des Bussystems gemäß dem zweiten Ausführungsbeispiel;
Fig. 8 und Fig. 9 jeweils eine Darstellung eines Beispiels für einen zeitlichen Spannungsverlauf von differentiellen Bussignalen für verschiedene Teile einer Nachricht bei einem dritten Ausführungsbeispiel;
Fig. 10 ein Schaltbild einer Sendestufe einer Teilnehmerstation eines Bussystems gemäß einem dritten Ausführungsbeispiel;
Fig. 11 und Fig. 12 jeweils eine Darstellung eines Beispiels für einen zeitlichen Spannungsverlauf von differentiellen Bussignalen für verschiedene Teile einer Nachricht bei einem vierten Ausführungsbeispiel;
Fig. 13 ein Schaltbild einer Ankopplung der Sendestufe einer Teilnehmerstation an Busadern eines Bussystems gemäß einem fünften Ausführungsbeispiel; und
Fig. 14 ein Schaltbild einer Ankopplung der Sendestufe einer Teilnehmerstation an Busadern eines Bussystems gemäß einer Modifikation des fünften Ausführungsbeispiels.

In den Figuren sind gleiche oder funktionsgleiche Elemente, sofern nichts anderes angegeben ist, mit denselben Bezugszeichen versehen.

### Beschreibung der Ausführungsbeispiele

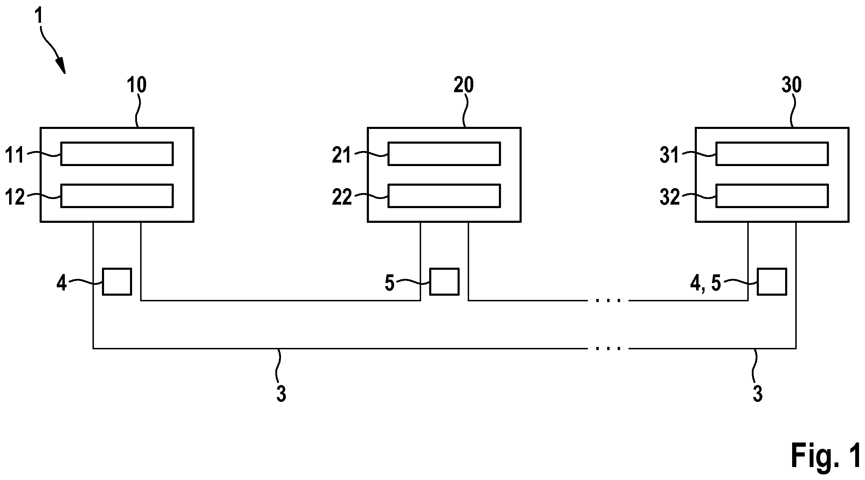

Fig. 1 zeigt als Beispiel ein Bussystem 1, das insbesondere grundlegend für ein CAN-Bussystem, ein CAN FD-Bussystem, ein CAN EL-Bussystem, und/oder Abwandlungen davon, ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine, insbesondere parallele, Busleitung 3, an die eine Vielzahl von Teilnehmerstationen 10, 20, 30 angeschlossen sind. Über die Busleitung 3 sind Nachrichten 4, 5 in der Form von Signalen zwischen den einzelnen Teilnehmerstationen 10, 20, 30 seriell übertragbar. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11 und eine Sende-/Empfangseinrichtung 12. Die Teilnehmerstation 20 hat dagegen eine Kommunikationssteuereinrichtung 21 und eine Sende-/Empfangseinrichtung 22. Die Teilnehmerstation 30 hat eine Kommunikationssteuereinrichtung 31 und eine Sende-/Empfangseinrichtung 32. Die Sende-/Empfangseinrichtungen 12, 22, 32 der Teilnehmerstationen 10, 20, 30 sind jeweils direkt an die Busleitung 3 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über die Busleitung 3 mit einer anderen Teilnehmerstation der Teilnehmerstationen 10, 20, 30, die an die Busleitung 3 angeschlossen sind.

Die Kommunikationssteuereinrichtung 11 kann wie ein herkömmlicher CAN-Controller ausgeführt sein. Die Kommunikationssteuereinrichtung 11 erstellt und liest erste Nachrichten 4, beispielsweise Classic CAN-Nachrichten 4. Die Classic CAN-Nachrichten 4 sind gemäß dem Classic Basisformat aufgebaut, bei welchem in der Nachricht 4 eine Anzahl von bis zu 8 Datenbytes umfasst sein können. Alternativ ist die Classic CAN-Nachricht 4 als CAN FD Nachricht aufgebaut, bei welcher eine Anzahl von bis zu 64 Datenbytes umfasst sein können, die noch dazu mit einer deutlich schnelleren Datenrate als bei der Classic CAN-Nachricht 4 übertragen werden. Im letzteren Fall ist die Kommunikationssteuereinrichtung 11 wie ein herkömmlicher CAN FD-Controller ausgeführt.

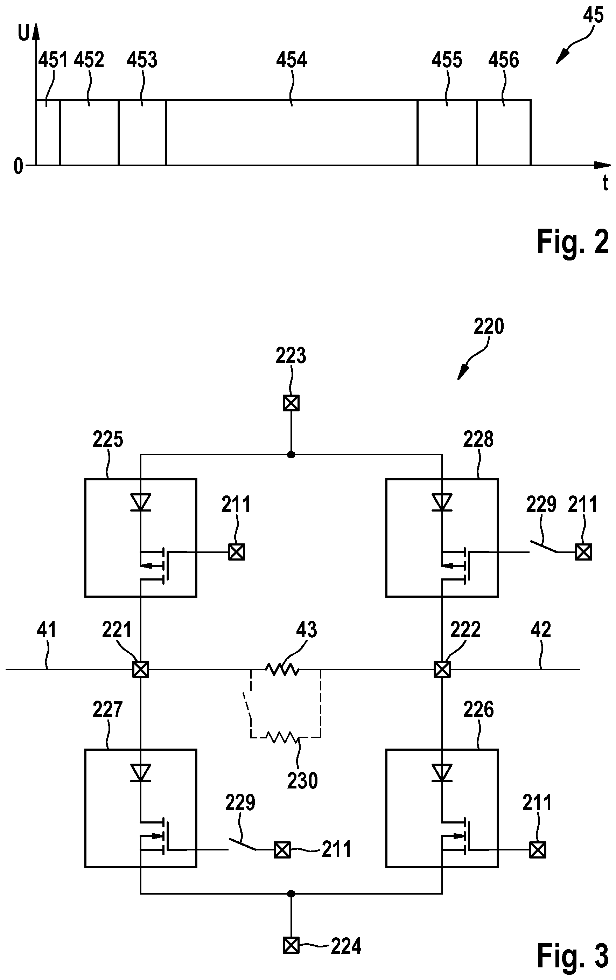

Die Kommunikationssteuereinrichtung 21 erstellt und liest zweite Nachrichten 5, die beispielsweise modifizierte CAN Nachrichten 5 sind. Hierbei sind die modifizierten CAN Nachrichten 5 auf der Grundlage eines CAN EL-Formats aufgebaut, das in Bezug auf Fig. 2 detaillierter beschrieben ist.

Die Kommunikationssteuereinrichtung 31 kann ausgeführt sein, um je nach Bedarf eine Classic CAN-Nachricht 4 oder eine CAN EL-Nachricht 5 für die Sende-/Empfangseinrichtung 32 bereitzustellen oder von dieser zu empfangen. Die Kommunikationssteuereinrichtung 21 erstellt und liest also eine erste Nachricht 4 oder zweite Nachricht 5, wobei sich die erste und zweite Nachricht 4, 5 durch ihren Datenübertragungsstandard unterscheiden, nämlich in diesem Fall CAN oder CAN EL. Alternativ ist die Classic CAN-Nachricht 4 als CAN FD Nachricht aufgebaut. Im letzteren Fall ist die Kommunikationssteuereinrichtung 11 wie ein herkömmlicher CAN FD-Controller ausgeführt.

Die Sende-/Empfangseinrichtung 12 kann wie ein herkömmlicher CAN Transceiver oder CAN FD Transceiver ausgeführt sein. Die Sende-/Empfangseinrichtung 22 kann bis auf die nachfolgend noch genauer beschriebenen Unterschiede als CAN EL-Transceiver ausgeführt sein. Die Sende-/Empfangseinrichtung 32 kann ausgeführt sein, um je nach Bedarf Nachrichten 4 gemäß dem derzeitigen CAN-Basisformat oder Nachrichten 5 gemäß dem CAN EL-Format für die Kommunikationssteuereinrichtung 31 bereitzustellen oder von dieser zu empfangen. Die Sende-/Empfangseinrichtungen 22, 32 sind zusätzlich oder alternativ wie ein herkömmlicher CAN FD Transceiver ausführbar.

Mit den beiden Teilnehmerstationen 20, 30 kann eine Bildung und dann Übertragung von Nachrichten 5 mit dem CAN EL Format sowie der Empfang solcher Nachrichten 5 realisiert werden.

Fig. 2 zeigt für die Nachricht 5 einen CAN EL Rahmen 45, wie er von der Sende-/Empfangseinrichtung 22 oder der Sende-/Empfangseinrichtung 32 gesendet wird. Der CAN-EL-Rahmen 45 ist für die CAN-Kommunikation auf der Busleitung 3 in unterschiedliche Felder unterteilt, nämlich ein Startfeld 451, ein Arbitrationsfeld 452, ein Steuerfeld 453, ein Datenfeld 454, ein Prüfsummenfeld 455 und ein Endefeld 456.

Das Startfeld 451 hat beispielsweise ein Bit, das auch SOF-Bit genannt wird und den Beginn des Rahmens bzw. Start of Frame anzeigt. In dem Arbitrationsfeld 452 ist ein Identifizierer mit insbesondere 32 Bit zur Identifikation des Senders der Nachricht enthalten. In dem Steuerfeld 453 ist ein insbesondere 13 Bit langer Datenlängecode (Data-Length-Code) enthalten, der Werte bis zu 4096 mit der Schrittweite von 1 haben kann. In dem Datenfeld 454 sind die Nutzdaten des CAN-EL-Rahmens bzw. der Nachricht 5 enthalten. Die Nutzdaten können entsprechend des Werts des Datenlängecodes bis zu 4096 Bytes aufweisen. In dem Prüfsummenfeld 455 ist eine Prüfsumme über die Daten in dem Datenfeld 454 einschließlich der Stuffbits enthalten, die vom Sender der Nachricht 5 nach jeweils 10 gleichen Bits als inverses Bit eingefügt werden. In dem Endefeld 456 ist mindestens ein Acknowledge-Bit enthalten und außerdem eine Folge von 11 gleichen Bits, welche das Ende des CAN EL Rahmens 45 anzeigen. Mit dem mindestens einen Acknowledge-Bit wird mitgeteilt, ob ein Empfänger in dem empfangenen CAN EL Rahmen 45 bzw. der Nachricht 5 einen Fehler entdeckt hat oder nicht.

In den Phasen zum Senden des Arbitrationsfelds 452 und des Endefelds 456 wird ein Physical Layer wie bei CAN und CAN-FD verwendet. Ein wichtiger Punkt während dieser Phasen ist, dass das bekannte CSMA/CR-Verfahren Verwendung findet, welches gleichzeitigen Zugriff der Teilnehmerstationen 10, 20, 30 auf die Busleitung 3 erlaubt, ohne dass die höher priorisierte Nachricht 4, 5 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf der Busleitung 3 geben muss, welche von anderen Teilnehmerstationen 10, 20, 30 mit dominanten Zuständen auf der Busleitung 3 "überfahren" werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit 2Mbps im realen Fahrzeug-Einsatz.

Das Steuerfeld 453 und das Datenfeld 454 werden von einem Sender der Nachricht 5 erst auf die Busleitung 3 gesendet, wenn die Teilnehmerstation 20 als der Sender die Arbitration gewonnen hat und die Teilnehmerstation 20 als Sender damit zum Senden der Felder 453 bis 456 einen exklusiven Zugriff auf die Busleitung 3 des Bussystems 1 hat. Bei der Arbitration wird mit Hilfe des Identifizierers in dem Arbitrationsfeld 452 bitweise zwischen den Teilnehmerstationen 10, 20, 30 ausgehandelt, welche Teilnehmerstation 10, 20, 30 die Nachricht 4, 5 mit der höchsten Priorität senden möchte und daher für die nächste Zeit zum Senden der Felder 453 bis 455 den exklusiven Zugriff auf die Busleitung 3 des Bussystems 1 bekommt.

Die Arbitration am Anfang eines Rahmens 45 bzw. der Nachricht 4, 5 und das Acknowledgement in dem Endefeld 456 am Ende des Rahmens 45 bzw. der Nachricht 4, 5 ist nur dann möglich, wenn die Bitzeit deutlich mehr als doppelt so lang ist wie die Signal-Laufzeit zwischen zwei beliebigen Teilnehmerstationen 10, 20, 30 des Bussystems 1. Daher wird die Bitrate in der Arbitrationphase bei Übertragung der Felder 451, 452, 456 langsamer gewählt als in den übrigen Feldern des Rahmens 45.

Fig. 3 zeigt die Ausgestaltung einer Sendestufe 220 der Sende-/Empfangseinrichtung 22 bei dem vorliegenden Ausführungsbeispiel. Die Empfangsstufe ist in Fig. 3 nicht gezeigt, kann jedoch ausgeführt sein wie eine herkömmliche Empfangsstufe für CAN oder CAN FD-Nachrichten.

In Fig. 3 ist die Sendestufe 220 an ihren Anschlüssen 221, 222 an die parallele Busleitung 3, genauer gesagt deren erste Busader 41 für CAN_H und deren zweite Busader 42 für CAN_L angeschlossen. Für die Spannungsversorgung für die erste und zweite Busader 41, 42 ist bei der Sende-/Empfangseinrichtung 12 ein Anschluss 223 vorgesehen. Die Spannungsversorgung kann insbesondere mit einer Spannung Vcc bzw. CAN-Supply von beispielsweise etwa 2,5 V gemäß dem Standard ISO11898-1:2015 als CAN Protokoll-Spezifikation mit CAN FD erfolgen. Selbstverständlich sind jedoch andere Spannungswerte als Spannung Vcc wählbar. Die Verbindung der Sende-/Empfangseinrichtung 22 mit Masse bzw. CAN_GND ist über einen Anschluss 224 realisiert. Zur Terminierung der ersten und zweiten Busader 41, 42 ist bei dem gezeigten Beispiel ein Abschlusswiderstand oder externer Buslastwiderstand 43 vorgesehen.

Gemäß Fig. 3 hat die Sendestufe 220 eine erste Endstufe 225 für das Signal CAN_H für die erste Busader 41 und eine zweite Endstufe 226 für das Signal CAN_L für die zweite Busader 42. Außerdem hat die Sendestufe 220 eine dritte Endstufe 227 für die erste Busader 41 und eine vierte Endstufe 228 für die zweite Busader 42. Die erste und vierte Endstufe 225 und 228 haben jeweils eine Diode und einen PMOS-Transistor (PMOS = p-leitender bzw. p-Kanal Metall-Oxid-Halbleiter). Die zweite und dritte Endstufe 226 und 227 haben jeweils eine Diode und einen NMOS-Transistor (NMOS = n-leitender bzw. n-Kanal Metall-Oxid-Halbleiter). Die Endstufen 225 bis 228 können wie die entsprechenden Endstufen für eine herkömmliche Endstufe von CAN ausgestaltet sein. Die Transistoren der Endstufen 225 bis 228 sind an ihren Gates jeweils direkt oder über einen Schalter 229 an einen Anschluss 211 anschließbar. Von dem Anschluss 211 wird ein Sendesignal TxD der Kommunikationssteuereinrichtung 11 in die Sendestufe 220 eingegeben. Die beiden Schalter 229 bilden eine Schalteinrichtung. Die beiden Schalter 229 sind insbesondere gemeinsam schaltbar.

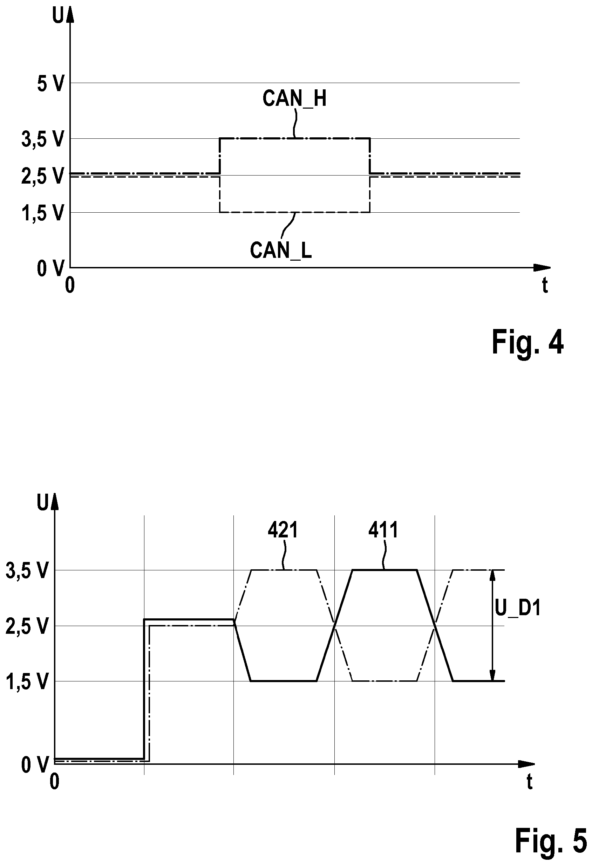

In der Phase zum Senden des Startfelds 451, des Arbitrationsfelds 452 und des Endefelds 456 aktiviert die Sende-/Empfangseinrichtung 22 in der Sendestufe 220 zum Treiben eines dominanten Buszustands nur die erste Endstufe 225 für das Signal CAN_H für die erste Busader 41 und die zweite Endstufe 226 für das Signal CAN_L für die zweite Busader 42. Dagegen bleiben die dritte und vierte Endstufe 227 und 228 inaktiv, und zwar nicht nur für einen rezessiven Buszustand sondern auch wenn die Sendestufe 220 einen dominanten Buszustand treiben muss. Dies kann beispielsweise durch Schalten der Schalter 229 in die geöffnete Stellung erfolgen, die in Fig. 4 gezeigt ist oder nur über ein entsprechendes Signal am Anschluss 211, wenn die Transistoren der Endstufen 225 bis 228 an ihren Gates jeweils direkt an den Anschluss 211 angeschlossen sind. Soll die Sendestufe 220 einen rezessiven Buszustand treiben, sind alle Endstufen 225, 226, 227, 228 gesperrt bzw. inaktiv. In Folge dessen stellen sich Signale CAN_H, CAN_L ein, die in Fig. 4 gezeigt und nachfolgend noch genauer beschrieben sind.

In der Phase zum Senden des Steuerfelds 453, des Datenfelds 454 und des Prüfsummenfelds 455 aktiviert die Sende-/Empfangseinrichtung 22 in der Sendestufe 220 dagegen sowohl die erste und dritte Endstufe 225, 227 für ein Signal 411 auf der ersten Busader 41 als auch die zweite und vierte Endstufe 226, 228 für ein Signal 421 auf der zweiten Busader 42, wie nachfolgend genauer beschrieben. Somit sind in dieser Phase des Sendens alle Endstufen 225 bis 228 aktiv, wie nachfolgend genauer beschrieben. Dies kann beispielsweise durch Schalten der Schalter 229 in die geschlossene Stellung erfolgen, bei welcher der Anschluss 211 für das Sendesignal TxD der Kommunikationssteuereinrichtung 11 an das Gate des jeweiligen Transistors der Endstufen 227, 228 angeschlossen ist. Alternativ ist das Schalten der Signalzustände 411, 421 auch nur über ein entsprechendes Signal am Anschluss 211 möglich, wie zuvor erwähnt. In Folge dessen stellen sich Signale 411, 421 ein, wie in Fig. 5 gezeigt und nachfolgend noch genauer beschrieben.

Bei dem in Fig. 4 gezeigten Zustand der Sendestufe 220 können die Buspegel für CAN_H, CAN_L mit einem Buslastwiderstand 43 von etwa 60 Ohm erzeugt werden. Dagegen können die Buspegel bei dem Zustand der Sendestufe 220, bei welchem die Schalter 229 in Fig. 3 geschlossen sind, mit einem Buslastwiderstand 43 von etwa 90 Ohm erzeugt werden. Die Umschaltung des Buslastwiderstands 43 kann insbesondere durch einen entsprechenden optionalen Widerstand 230 der Sendestufe 220 erfolgen, der parallel zu dem Buslastwiderstand 43 schaltbar ist. Dadurch ist eine Veränderung des Widerstandswerts des effektiven Buslastwiderstands 43 bzw. 43, 230 von einem ersten bzw. kleineren Widerstandswert in der Arbitrationsphase, welche die Felder 456, 451, 452 umfasst, auf einen zweiten bzw. größeren Widerstandswert in der Datenphase bewirkbar, welche die Felder 453 bis 455 umfasst. Ist der Widerstand 230 nicht vorhanden, kann der Buslastwiderstand 43 für die Arbitrationsphase und die Datenphase jeweils gleich bleiben. Insbesondere ist der Buslastwiderstand 43 dann als ein Wert zwischen 60 und 90 Ohm, beispielsweise 70 Ohm oder ein anderer geeigneter Wert, wählbar.

Gemäß Fig. 4 werden mit der Sendestufe 220 nur die dominanten Zustände der differentiellen Signale CAN_H, CAN_L unterschiedlich getrieben. Dagegen sind die Buspegel auf der Busleitung 3 für die rezessiven Zustände gleich der Spannung Vcc bzw. CAN-Supply von beispielsweise etwa 2,5 V. Somit ergibt sich für eine Spannung VDIFF = CAN_H - CAN_L für die rezessiven Zustände ein Wert von 0V und für die dominanten Zustände ein Wert von ca. 2,0 V, wie aus Fig. 4 ablesbar.

Erkennt die Sende-/Empfangseinrichtung 22 das Ende der Arbitrationsphase, so wird die Sendestufe 220 von dem in Fig. 4 gezeigten Zustand in den Zustand umgeschaltet, in welchem sich die Signalverläufe von Fig. 5 für die jeweils von der Sendestufe 220 erzeugten Buspegel ergeben.

Gemäß Fig. 5 werden in der schnelleren Datenphase, welche die Felder 453 bis 455 umfasst, für Signale 411, 421 nach der Umschaltung von dem Zustand von

Fig. 4 ein Leerlaufzustand idle_LP direkt nach der Umschaltung erreicht, bei welchem sich bei dem speziellen Beispiel von Fig. 5 ein Buspegel von etwa 0 V einstellt. In der Regel sollte der Zustand eines Buspegels von etwa 0V nach der Umschaltung nicht auftreten. Danach wird ein Leerlaufzustand idle erreicht, bei welchem sich bei dem speziellen Beispiel von Fig. 5 ein Buspegel von etwa 2,5 V einstellt, bevor Buszustände entsprechend den Datenzuständen Data_0 und Data_1 erreicht werden. Hierbei wird das Signal 411 für den Buszustand entsprechend dem Datenzustand Data_0 über den NMOS-Transistor der dritten Endstufe 227 auf etwa 1,5 V gezogen. Dagegen wird das Signal 421 für den Buszustand entsprechend dem Datenzustand Data_0 über den PMOS-Transistor der vierten Endstufe 228 auf etwa 3,5 V gezogen. Data_1 wird erreicht, indem das Signal 411 über den PMOS-Transistor der ersten Endstufe 225 auf etwa 3,5 V gezogen und das Signal 421 über den NMOS-Transistor der zweiten Endstufe 226 auf etwa 1,5 V gezogen wird. Bei den beschriebenen Zuständen sind auf der Busleitung 3 bei dem Zustand Data_0 Buspegel zwischen etwa -0,6 V und etwa - 2 V und bei dem Zustand Data_1 Buspegel zwischen etwa 0,6 V und etwa 2 V vorhanden. Bei den Zuständen Data_0 und Data_1 hat eine Differenzspannung U_D der Signale 421, 411 also in der Regel eine maximale Amplitude von etwa 1,4 V.

Mit anderen Worten erzeugt die Sendestufe 220 in einer ersten Betriebsart gemäß Fig. 4 einen ersten Datenzustand, beispielsweise Data_1, als Buszustand mit unterschiedlichen Buspegeln für zwei Busadern 41, 42 der Busleitung und einen zweiten Datenzustand, beispielsweise Data_0, als Buszustand mit demselben Buspegel für die zwei Busadern 41, 42 der Busleitung 3.

Außerdem schaltet die Sendestufe 220 für die zeitlichen Verläufe der Signale 411, 421 gemäß Fig. 5 in einer zweiten Betriebsart, welche die Datenphase umfasst, sowohl die erste und zweite Endstufe 225, 226 leitfähig und sperrt die Endstufen 227, 228, wenn ein erster Datenzustand, beispielsweise der Zustand Data_1, auf die Busleitung 3 getrieben werden soll. Dagegen schaltet die Sendestufe 220 die dritte und vierte Endstufe 227 und 228 leitfähig und sperrt die Endstufen 225, 226, wenn ein zweiter Datenzustand, beispielsweise der Zustand Data_0, auf die Busleitung 3 getrieben werden soll. Somit ist die Sendestufe 220 in der zweiten Betriebsart ausgestaltet, den ersten und zweiten Datenzustand jeweils als Buszustand mit unterschiedlichen Buspegeln für die zwei Busadern 41, 42 der Busleitung 3 zu erzeugen

Durch die beschriebene Umschaltung der Sendestufe 220 können in der Datenphase weit höhere Datenraten als mit CAN oder CAN-FD erreicht werden. Zudem kann die Datenlänge in dem Datenfeld 454 auf bis zu 4096 Byte erhöht werden. Dadurch können die Vorteile von CAN in Bezug auf die Arbitrierung beibehalten und dennoch eine größere Anzahl von Daten in kürzerer Zeit als bisher effektiv übertragen werden, das heißt ohne dass eine Wiederholung der Daten aufgrund eines Fehlers notwendig wäre, wie nachfolgend erläutert.

Ein weiterer Vorteil besteht darin, dass Fehlerrahmen in dem Bussystem 1 bei der Übertragung von Nachrichten 5 nicht benötigt werden. Dadurch werden Nachrichten 5 nicht mehr zerstört, was eine Ursache für die Notwendigkeit einer Doppelübertragung von Nachrichten beseitigt. Dadurch steigt die Nettodatenrate.

Noch dazu ist es mit der Sendestufe 220 möglich, mehrere Domänen bzw. Teilbussysteme 1 per hier nicht näher beschriebenen Switches bedarfsgerecht miteinander zu verbinden. Damit kann die Vernetzung in einer technischen Anlage, beispielsweise in einem Fahrzeug deutlich erweitert werden.

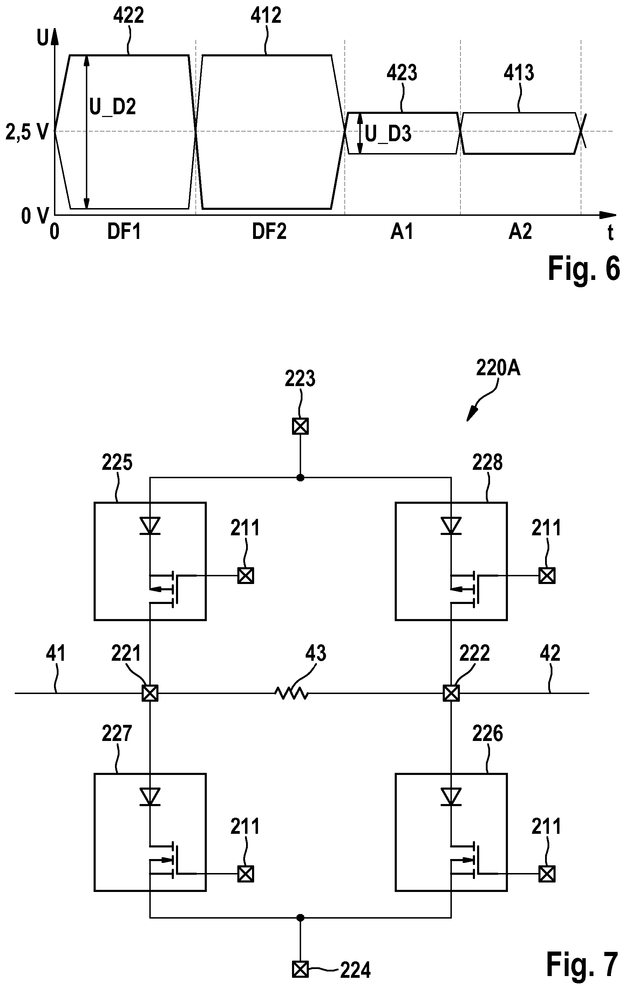

Fig. 6 zeigt Spannungsverläufe von Bussignalen 412, 422 und 413, 423 gemäß einem zweiten Ausführungsbeispiel. Die Spannungsverläufe der Bussignale 412, 422 und 413, 423, ergeben sich, wenn die Schalter 229 der Sendestufe 220 von Fig. 3 entfallen oder im geschlossenen Zustand gehalten werden, so dass auch die Transistoren der Endstufen 227, 228 direkt mit den Anschlüssen 211 verbunden sind.

Fig. 7 zeigt die daraus resultierende Sendestufe 220A des zweiten Ausführungsbeispiels.

Somit wird gemäß dem zweiten Ausführungsbeispiel für den gesamten Rahmen 45 von Fig. 2 ein Physical Layer verwendet, welcher die genannte Arbitrationsphase für die Felder 451, 452 und 456 sowie eine lange und schnelle Datenphase für die Felder 453, 454, 455 erlaubt. Der Vorteil der Schaltung der Sendestufe 220A in eine derartige Betriebsart ist, dass die Sendestufe 220A komplett symmetrisch aufgebaut ist und auch in allen Kommunikationsphasen symmetrisch arbeitet. Es wird also der Wert des Buslastwiderstands 43 nicht umgeschaltet, wie zuvor in Bezug auf Fig. 3 und Fig. 4 beschrieben.

In Fig. 6 sind die resultierenden Bussignale in allen vier möglichen Buszuständen DF1, DF2, A1, A2 bei einer derartigen Sendestufe 220A gezeigt. Die Differenzspannung U_D2 der Buszustände DF1, DF2 hat eine größere Amplitude als die Differenzspannung U_D3 der Buszustände A1, A2. Hierbei hat die Amplitude der Differenzspannung U_D2 einen Wert, der n mal größer ist als ein Wert der Amplitude der Differenzspannung U_D3, wobei n eine beliebig wählbare natürliche Zahl ist. Jedoch berechnet sich die Obergrenze für die Anzahl von Teilnehmerstationen 10, 20, 30 in dem Bussystem 1 als n - 1. Die Amplitude der Differenzspannung U_D3 kann daher auch als Amplitudengrundeinheit bezeichnet werden.

Mit den beiden Buszuständen DF1 und DF2 wird nach abgeschlossener Arbitration in der Datenphase, also in den Feldern 453 bis 455, kommuniziert. Dies ist ähnlich zu der Vorgehensweise, wie zuvor in Bezug auf Fig. 5 beschrieben. Der Buszustand DF1 hat eine positive Differenzspannung Vdiff = U_D2 (V_Plus - V_Minus) zur Folge. Der Buszustand DF2 hat eine negative Differenzspannung Vdiff = -U_D2 zur Folge. Der Buszustand A1 hat eine positive Differenzspannung Vdiff = U_D3 (V_Plus - V_Minus) zur Folge. Der Buszustand A2 hat eine negative Differenzspannung Vdiff = -U_D3 zur Folge.

Die Buszustände A1 und A2 sind eingeführt, um eine Arbitration zu erlauben. Die Buszustände A1, A2 gleichen qualitativ den Buszuständen DF1 und DF2, werden von der Sendestufe 220A jedoch schwächer als die Buszustände DF1, DF2 getrieben, wie in Fig. 7 veranschaulicht. Daher können die Buszustände A1, A2 von anderen Teilnehmerstationen 10, 30 zu Arbitrationszwecken überschrieben werden.

Während einer Arbitrationsphase sind die Teilnehmerstationen 10, 20, 30, insbesondere die Sendestufe 220A ausgestaltet, eine Differenzspannung Vdiff mit einer Amplitudengrundeinheit, also U_D3 = 1 Einheit, auf die Busleitung 3 zu senden und zu prüfen, welche Differenzspannung Vdiff auf der Busleitung 3 vorliegt. Liegt eine Differenzspannung Vdiff > 1 Einheit bzw. Amplitudengrundeinheit vor, zieht sich die betroffene Teilnehmerstation 10, 20, 30 zurück und ist daher Verlierer der Arbitration.

Somit schaltet die Sendestufe 220A bei dem vorliegenden Ausführungsbeispiel in einer ersten Betriebsart zwischen den zwei ersten verschiedenen Buszuständen A1, A2 für die Nachricht, wenn von der Nachricht 5 Daten der Arbitrationsphase oder ersten Phase 456, 451, 452 zu senden sind. Außerdem schaltet die Sendestufe 220A in eine zweite Betriebsart mit den zwei zweiten verschiedenen Buszuständen DF1, DF2 für die Nachricht 5, wenn von der Nachricht 5 Daten der Datenphase oder zweiten Phase 453, 454, 455 zu senden sind. Die Sendestufe 220A schaltet also zwischen mehr als zwei verschiedenen Buszuständen DF1, DF2, A1, A2, um die Nachricht 5 bzw. den Rahmen 45 zu senden. Hierbei sind jeweils die zwei Buszustände DF1, DF2 symmetrisch zueinander. Außerdem sind die zwei Buszustände A1, A2 symmetrisch zueinander. Selbstverständlich sind noch mehr als die genannten vier Buszustände möglich.

Dadurch sind bei dem vorliegenden Ausführungsbeispiel sowohl in der Arbitrations- als auch in der Datenphase immer alle Komponenten der Sendestufe 220A aktiv und beteiligt, was zu maximaler Symmetrie führt. Infolgedessen ergeben sich Vorteile bei den Bit-Timings bzw. dem Zeitverhalten der Bits der Nachricht 5 und elektromagnetischer Verträglichkeit (EMV).

Außerdem können mit der Ausgestaltung der Sendestufe 220A bei dem vorliegenden Ausführungsbeispiel die gleichen Vorteile erzielt werden, wie zuvor in Bezug auf das erste Ausführungsbeispiel beschrieben.

Gemäß einer Modifikation des zweiten Ausführungsbeispiels wird bei der Arbitration anstelle der Buszustände A1 mit A2 eine der folgenden Kombinationen von Buszuständen verwendet:
- Buszustand DF1 mit Buszustand A2
- Buszustand DF2 mit Buszustand A1

Gemäß einer weiteren Modifikation des zweiten Ausführungsbeispiels werden bei einer weiteren Ausführung alle vier Buszustände DF1, DF2, A1, A2 zumindest zum Senden des Datenfelds 454 genutzt. Zudem ist eine Nutzung der vier Buszustände DF1, DF2, A1, A2 in den Feldern 453, 455 möglich. Durch Codierung kann somit die Bitrate erhöht werden.

Gemäß noch einer weiteren Modifikation des zweiten Ausführungsbeispiels wird die Frequenz der Signale 412, 422, 413, 423 reduziert. Dadurch ist eine Verbesserung in dem EMV-Verhalten erreichbar. Durch die zuvor beschriebene Codierung in mehr als zwei Buszustände kann die Bitrate trotz geringerer Frequenz konstant gehalten werden.

Ansonsten gilt das Gleiche, wie zuvor im Zusammenhang mit dem ersten Ausführungsbeispiel beschrieben.

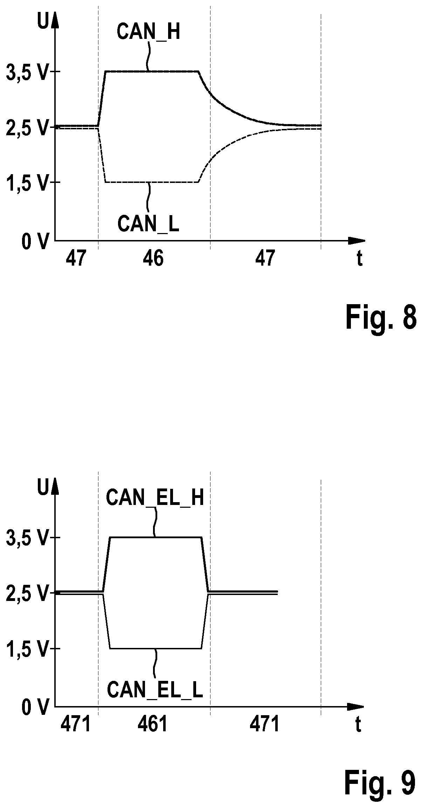

Fig. 8 und Fig. 9 zeigen Spannungsverläufe von Bussignalen CAN_H, CAN_L zur Erläuterung des Verhaltens eines Bussystems 1 gemäß einem dritten Ausführungsbeispiel.

Fig. 8 zeigt die bekannten Spannungsverläufe der Bussignale CAN_H und CAN_L, die zum Senden einer Nachricht 5 bzw. eines Rahmens 45 gemäß dem vorliegenden Ausführungsbeispiel für die Arbitrationsphase 456, 451, 452 des Rahmens 45 verwendet werden. Die Spannungsverläufe der Bussignale CAN_H und CAN_L zeigen bei einem Übergang von einem dominanten Zustand 46 zu einem rezessiven Zustand 47 einen deutlich langsameren Zustandswechsel als bei einem Übergang von dem rezessiven Zustand 47 zu dem dominanten Zustand 46.

Im Unterschied dazu werden jedoch bei dem vorliegenden Ausführungsbeispiel für die Datenphase 453, 454, 455 des Rahmens 45 Signale CAN_EL_H und CAN_EL_L gemäß Fig. 9 erzeugt, die einen High-Zustand 461 und einen Low-Zustand 471 aufweisen. Die Signale gemäß Fig. 9 werden mit einem Physical-Layer erzeugt, bei welchem die High-Zustände 461 einem dominanten Zustand 46 von CAN bzw. CAN FD gleichen, wie er in Fig. 8 gezeigt ist und Spannungswerte für CAN_H = 3,5 V und CAN_L = 1,5 V hat. Zudem werden bei dem Physical-Layer gemäß Fig. 9 Low-Zustände 471 erzeugt, welche von ihrem Pegel her einem rezessiven Zustand 47 von CAN bzw. CAN FD gleichen, wie er in Fig. 8 gezeigt ist und Werte für CAN_H = CAN_L = 2,5 V hat.

Wie in Fig. 9 gezeigt, findet der Übergang von dem High-Zustand 461 zu dem Low-Zustand 471 in etwa genauso schnell statt wie der Übergang von dem Low-Zustand 471 zu dem High-Zustand 461.

Dies wird erreicht, indem die Low-Zustände 471 niederohmig getrieben werden. ("niederohmiges Rezessiv"). Dadurch wird der langsamere Übergang von dem dominanten Zustand 46 zu dem rezessiven Zustand 47, wie er in Fig. 8 gezeigt ist, bei den Signalen von Fig. 9 beschleunigt. In der Folge können für die Datenphase 453, 454, 455 des Rahmens 45 Bitraten deutlich über 2Mbps erreicht werden.

Daher wird bei dem vorliegenden Ausführungsbeispiel mit der Sende-/Empfangseinrichtung 22 und/oder der Sende-/Empfangseinrichtung 32, wenn das Ende der Arbitrationsphase erkannt wird, vom CAN-Physical-Layer in ein anderes Physical-Layer umgeschaltet. Da auf Fehlerrahmen bzw. Error-Frames verzichtet werden kann, muss in der Datenphase keine andere Teilnehmerstation 10, 20, 30 die aktuell sendende Teilnehmerstation 10, 20, 30 überfahren können. Folglich werden in der Datenphase keine rezessiven (hochohmigen) Buszustände benötigt.

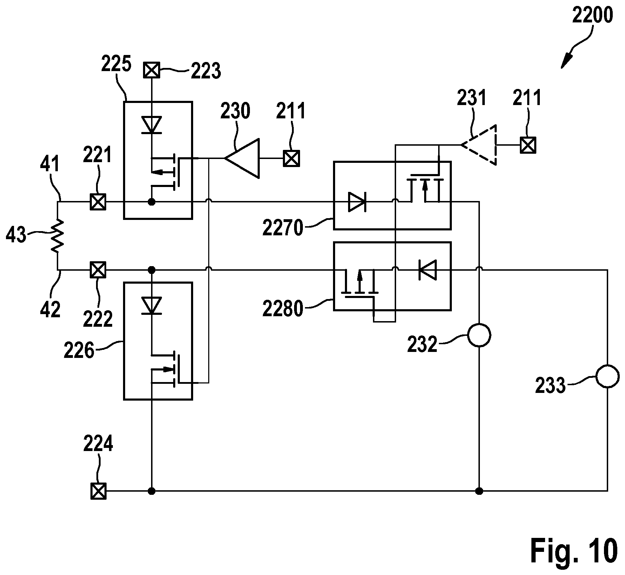

Der Physical Layer für die Signalverläufe gemäß Fig. 9 kann beispielsweise mit einer Sendestufe 2200 gemäß Fig. 10 erzielt werden.

Wie in Fig. 10 gezeigt, hat die Sendestufe 2200 gemäß dem vorliegenden Ausführungsbeispiel somit im Unterschied zu der Sendestufe 220 von Fig. 3 eine dritte Endstufe 2270, die mit einer Spannungsquelle 232 verbunden ist und eine vierte Endstufe 2280, die mit einer Spannungsquelle 233 verbunden ist. Die dritte Endstufe 2270 hat einen NMOS-Transistor und eine Diode. Die vierte Endstufe 2280 hat einen PMOS-Transistor und eine Diode. Die Transistoren der ersten und zweiten Endstufe 225, 226 werden über eine Treiberschaltung 230 mit dem Sendesignal TxD angesteuert. Die Transistoren der dritten und vierten Endstufe 225, 226 werden über eine Treiberschaltung 231 mit dem Sendesignal TxD angesteuert.

In der Datenphase des Rahmens 45, also bei hoher Bitrate, wird ein High-Zustand 461 abgebildet, indem die über die Treiberschaltung 230 angesteuerten Endstufen 225, 226 leitfähig werden oder aktiv geschaltet werden und die über die Treiberschaltung 231 angesteuerten Endstufen 227, 228 und Spannungsquellen 232, 233 hochohmig bzw. abgeschaltet sind. Um einen Low-Zustand 471 zu treiben (niederohmig getriebenes Rezessiv), wird für die über die Treiberschaltung 230 angesteuerten Endstufen 225, 226 die Treiberfähigkeit, insbesondere stark, reduziert und die über die Treiberschaltung 231 angesteuerten Endstufen 227, 228 und Spannungsquellen 232, 233 werden leitfähig. Die Reduktion der Treiberfähigkeit umfasst auch den Fall, dass die Endstufen 225, 226 abgeschaltet werden, was die stärkste Reduktion der Treiberfähigkeit bedeutet. Somit zieht der NMOS-Transistor der dritten Endstufe 2270 den Anschluss 221 für CAN-EL_H auf 2,5V und der PMOS-Transistor der vierten Endstufe 2280 hebt den Anschluss 221 für CAN-EL_L auf 2,5 V, wodurch ein Low-Buszustand 471 entsteht.

Die Schaltung von Fig. 10 ist vor allem in Junction-Isolated-Halbleiter-Technologien sinnvoll.

Dadurch wird bei dem vorliegenden Ausführungsbeispiel in der Datenphase eine sehr gute Symmetrie der Bussignale erreicht. Infolgedessen ergeben sich Vorteile bei den Bit-Timings bzw. dem Zeitverhalten der Bits der Nachricht 5 und elektromagnetischer Verträglichkeit (EMV).

Außerdem können mit der Ausgestaltung der Sendestufe 2200 bei dem vorliegenden Ausführungsbeispiel die gleichen Vorteile erzielt werden, wie zuvor in Bezug auf das erste und zweite Ausführungsbeispiel beschrieben.

Das zuvor genannte Prinzip des niederohmigen Treibens des Low-Zustands 471 (niederohmig getriebenes Rezessiv) ist alternativ für alle anderen seriellen Bussysteme einsetzbar, bei welchen Rezessiv-Zustände vorhanden sind. Ansonsten gilt das Gleiche, wie zuvor im Zusammenhang mit dem ersten Ausführungsbeispiel beschrieben.

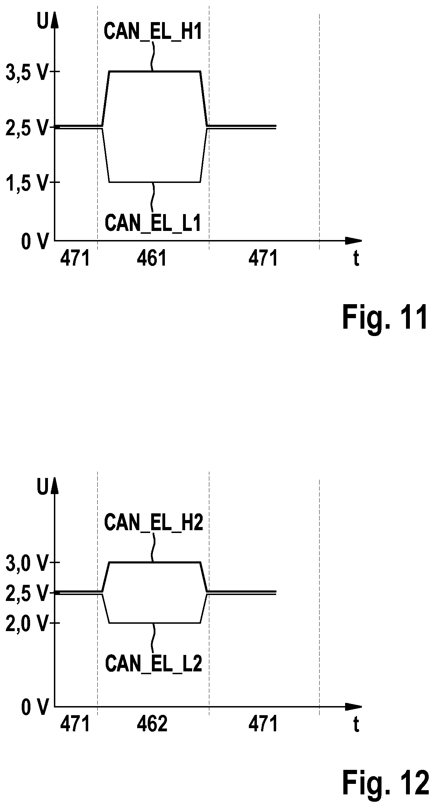

Fig. 11 und Fig. 12 zeigen Spannungsverläufe von Bussignalen CAN_EL_H1, CAN_EL_L1 und CAN_EL_H2, CAN_EL_L2 zur Erläuterung des Verhaltens eines Bussystems 1 gemäß einem vierten Ausführungsbeispiel.

Die Spannungsverläufe der Bussignale CAN_EL_H1, CAN_EL_L1 von Fig. 11 sind gleich den Spannungsverläufen der Bussignale CAN_EL_H, CAN_EL_L von Fig. 9. Der Unterschied besteht jedoch darin, dass die Sendestufe 2200 von Fig. 10 die Spannungsverläufe der Bussignale CAN_EL_H1, CAN_EL_L1 von Fig. 11 in der Arbitrationsphase des Rahmens 45 erzeugt. Alternativ sind jedoch die Spannungsverläufe der Bussignale CAN_H, CAN_L von Fig. 8 in der Arbitrationsphase des Rahmens 45 verwendbar.

Dagegen schaltet die Sendestufe 2200 bei dem vorliegenden Ausführungsbeispiel, wenn das Ende der Arbitrationsphase erkannt wird, in eine Betriebsart um, bei welcher die Sendestufe 2200 die Spannungsverläufe der Bussignale CAN_EL_H2, CAN_EL_L2 von Fig. 12 für die Daten der Datenphase des Rahmens 45 erzeugt. Das Bussignal CAN_EL_H2 von Fig. 12 hat in einem dominanten Zustand 462 einen Spannungspegel von etwa 3,0 V. Der High-Zustand 461 von Fig. 11, der ebenfalls ein dominanter Zustand ist, entspricht dem dominanten Zustand 462 von Fig. 12. Das Bussignal CAN_EL_L2 von Fig. 12 hat in dem dominanten Buszustand 462 einen Spannungspegel von etwa 2,0 V. Somit hat der dominante Buszustand 462 Spannungspegel für die Bussignale CAN_EL_H2, CAN_EL_L2, die gegenüber den Spannungspegeln für den dominanten Buszustand 461 der Bussignale CAN_EL_H1, CAN_EL_L1 in der Arbitrationsphase reduziert sind. Dadurch liegt auch die Differenzspannung Vdiff = CAN_EL_H2 - CAN_EL_L2 der Signale von Fig. 12 nur bei 1,0 V und ist damit geringer als, genauer gesagt nur halb so groß wie, die Differenzspannung Vdiff der Signale von Fig. 11 oder Fig. 8, vorausgesetzt der Buslastwiderstand 43 bleibt gleich. Dagegen sind die Low-Zustände 471 unverändert.

Im Vergleich zu den Bussignalen gemäß Fig. 8 und Fig. 9 des vorangehenden Ausführungsbeispiels ergeben sich bei dem vorliegenden Ausführungsbeispiel stabilere Signalverläufe an Vdiff, was einen Empfang kleinerer Sendepegel mit den Teilnehmerstationen 20, 30, genauer gesagt deren Sende-/Empfangseinrichtungen 22, 32, ermöglicht.

Mit den beschriebenen Signalen von Fig. 11 und Fig. 12 kann sowohl in zumindest dem Datenfeld 454 eine stark erhöhte Bitrate von >12Mpbs und eine Datenmenge bis 4096 Byte gefahren werden, wie zuvor bereits beschrieben. Jedoch kann durch die Umschaltung der Bussignale in der Datenphase auf die Bussignale CAN_EL_H2, CAN_EL_L2 die Stromaufnahme und damit der Energieverbrauch der Sendestufe 2200 deutlich gegenüber den vorangehenden Ausführungsbeispielen gesenkt werden, auch wenn pro Zeit viel mehr Schaltvorgänge stattfinden als bei CAN oder CAN FD. Erreicht wird dies durch eine Senkung der Sendepegel bzw. der Amplitude von VDIFF zumindest im Datenfeld 454.

Um bei steigender Bitrate brauchbare Signalintegrität zu erreichen, werden die Topologien der Bussysteme 1 stark vereinfacht werden müssen. Somit ergibt sich hier der Vorteil, dass durch die reduzierten Sendepegel auch eine geringere Abstrahlung vorhanden ist und dadurch die EMV-Verträglichkeit verbessert wird.

Ansonsten gilt das Gleiche, wie zuvor im Zusammenhang mit dem dritten Ausführungsbeispiel beschrieben.

Bei einer Modifikation des dritten Ausführungsbeispiels hat die Sendestufe 2200 von Fig. 10 keine Endstufen 2270, 2280. In diesem Fall ist die Sendestufe 2200 von Fig. 10 ausgestaltet wie eine herkömmliche CAN-Sendestufe. Um die vorangehend beschriebenen Signalverläufe von Fig. 11 und Fig. 12 zu erzielen, wird eine derartige herkömmliche CAN-Sendestufe derart gesteuert, dass für dominante Zustände bzw. High-Zustände 461 außerhalb der Datenphase, also Signalverläufe gemäß Fig. 11, der Treiber bzw. die Endstufen 225, 226 "normal" wie bei CAN betrieben werden. Dagegen werden für dominante Zustände 462 von Fig. 12, also in der Datenphase 225 und 226, der Treiber bzw. die Endstufen 225, 226 hochohmiger betrieben, wodurch der Pegel der jeweiligen dominanten Zustände 462 im Vergleich zu dem Pegel der jeweiligen dominanten Zustände bzw. High-Zustände 461 reduziert ist.

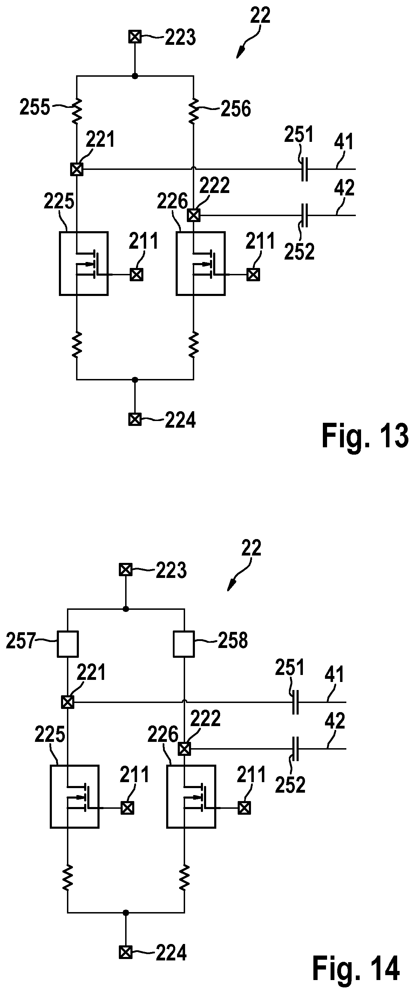

Fig. 13 zeigt ein Beispiel für eine Ankopplung der Sende-/Empfangseinrichtungen 22 an die Busleitung 3 mit ihren beiden Busadern 41, 42. Die Ankopplung kann bei allen Sende-/Empfangseinrichtungen 22, 32 der vorangehenden Ausführungsbeispiele und deren Sendestufen 220, 220A, 2200 zum Einsatz kommen.

Für die Ankopplung der Sende-/Empfangseinrichtung 22 an die Busleitung 3 ist ein erster Kopplungskondensator 251 für die Ankopplung der Sende-/Empfangseinrichtungen 22 an die erste Busader 41 und ein zweiter Kopplungskondensator 251 für die Ankopplung der Sende-/Empfangseinrichtungen 22 an die zweite Busader 42 vorgesehen. Zudem ist zwischen dem Anschluss 223 für die Spannungsversorgung für die erste und zweite Busader 41, 42 und dem Anschluss 221 für die erste Busader 41 ein Widerstand 255 vorgesehen. Außerdem ist zwischen dem Anschluss 223 und dem Anschluss 222 für die zweite Busader 42 ein Widerstand 256 vorgesehen.

Die Kapazitäten oder Kopplungskondensatoren 251, 252 sind extern von der jeweiligen Sende-/Empfangseinrichtungen 22 vorgesehen. Die Kopplungskondensatoren 251, 252 realisieren im Gegensatz zu anderen seriellen Bussystemen 1, wie CAN oder CAN-FD oder Flexray, usw., eine galvanisch isolierte Verbindung der jeweiligen Sende-/Empfangseinrichtung 22 zu den Busadern 41, 42.

Vorteilhaft an der AC-Kopplung bzw. Wechselspannungskopplung oder Wechselstromkopplung mit Hilfe der Kopplungskondensatoren 251, 252 ist, dass Gleichtaktstörungen (Common-Mode-Störungen) auf der Busleitung 3 die jeweils vorhandene Sendestufe 220, 220A, 2200 der vorangehenden Ausführungsbeispiele oder gemäß Fig. 13 nicht stören. Ein weiterer Vorteil liegt darin, dass die jeweils vorhandene Sendestufe 220, 220A, 2200 der vorangehenden Ausführungsbeispiele oder gemäß Fig. 13 aufgrund der galvanischen Isolierung bzw. Trennung in Niedervolt-CMOS-Technologie ausgeführt werden kann (CMOS = Complementary Metal-Oxide-Semiconductor = Halbleiterbauelemente, bei denen sowohl p-Kanal- als auch n-Kanal-MOS-Transistoren auf einem gemeinsamen Substrat verwendet werden). Infolgedessen ergeben sich eine deutlich höhere Genauigkeit zwischen den beiden Pin-Treiberstufen der Endstufen 225, 226 sowie schnellere Schaltzeiten.

Dadurch kann die Schnelligkeit der Übertragung der Daten in dem Bussystem 1 der zuvor beschriebenen Ausführungsbeispiele weiter erhöht werden.

Bei der Schaltung von Fig. 13 ist die Sendestufe derart aufgebaut, um den ersten und zweiten Kopplungskondensator (251, 252) mit hohen oder niedrigen Strömen auf die entsprechenden Pegel eines dominanten oder rezessiven Buszustands bzw. des High-Buszustands (461; 462) und des Low-Buszustands (471) zu ziehen.

Wie in Fig. 14 sehr schematisch gezeigt, ist gemäß einer Modifikation des fünften Ausführungsbeispiels anstelle des Widerstands 255, der zwischen dem Anschluss 223 für die Spannungsversorgung für die erste und zweite Busader 41, 42 und dem Anschluss 221 für die erste Busader 41 vorgesehen ist, ein Transistor 257 vorgesehen. Außerdem ist anstelle des Widerstands 256, der zwischen dem Anschluss 223 und dem Anschluss 222 für die zweite Busader 42 vorgesehen ist, ein Transistor 258 vorgesehen. Auch auf diese Weise kann mit den Kopplungskondensatoren 251, 252 die galvanisch isolierte Verbindung der jeweiligen Sende-/Empfangseinrichtung 22 zu den Busadern 41, 42 ausgeführt sein.

Alle zuvor beschriebenen Ausgestaltungen des Bussystems 1, der Teilnehmerstationen 10, 20, 30 und des von diesem ausgeführten Verfahren können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 10 in dem Bussystem 1 entfallen. Es ist möglich, dass eine oder mehrere der Teilnehmerstationen 20 oder 30 in dem Bussystem 1 vorhanden sind.

## Patentansprüche

1. Teilnehmerstation (10; 20; 30) für ein serielles Kommunikationsnetzwerk (1), mit
einer Sendestufe (220) zum Senden einer Nachricht (4; 5) auf eine Busleitung (3) des Bussystems (1), wobei die Sendestufe (220) beim Senden von verschiedenen Phasen einer Nachricht (4; 5) ausgestaltet ist, zwischen einer ersten Betriebsart und einer zweiten Betriebsart zu schalten,
wobei die Sendestufe (220) in der ersten Betriebsart ausgestaltet ist, einen ersten Datenzustand als Buszustand (A1; DF1; DF2) mit unterschiedlichen Buspegeln für zwei Busadern (41, 42) der Busleitung (3) zu erzeugen und einen zweiten Datenzustand als Buszustand (A2; A2; A1) mit unterschiedlichen Buspegeln für die zwei Busadern (41, 42) der Busleitung (3) zu erzeugen,
wobei der Buszustand (A1; DF1; DF2) für den ersten Datenzustand eine Differenzspannung (U_D3; U_D2) mit anderer Amplitude zur Folge hat als der Buszustand (DF2; A2; A1) für den zweiten Datenzustand und/oder der Buszustand (A1; DF1; DF2) für den ersten Datenzustand eine positive Differenzspannung (U_D3; U_D2) und der Buszustand (A2; DF2) für den zweiten Datenzustand eine negative Differenzspannung (-U_D3; -U_D2) zur Folge haben,
wobei die Sendestufe (220) in der zweiten Betriebsart ausgestaltet ist, einen dritten Datenzustand als Buszustand (DF1; DF2; A2) mit unterschiedlichen Buspegeln für die zwei Busadern (41, 42) der Busleitung (3) zu erzeugen und einen vierten Datenzustand als Buszustand (DF2; A2; A1) mit unterschiedlichen Buspegeln für zwei Busadern (41, 42) der Busleitung (3) zu erzeugen,
wobei der Buszustand (DF1) für den dritten Datenzustand eine positive Differenzspannung (U_D2) und der Buszustand (DF2) für den vierten Datenzustand eine negative Differenzspannung (-U_D2) zur Folge haben,
wobei die Sendestufe (220) ausgestaltet ist, jeweils zwei Buszustände (A1, A2; DF1, DF2) des ersten bis vierten Buszustands (A1; A2; DF1; DF2) symmetrisch zueinander zu erzeugen,
wobei die Sendestufe (220) ausgestaltet ist, zwei der zueinander symmetrisch zu erzeugenden Buszustände (A1, A2) des ersten bis vierten Buszustands (A1; A2; DF1; DF2) schwächer zu treiben als die zwei anderen zueinander symmetrisch zu erzeugenden Buszustände (DF1; DF2) des ersten bis vierten Buszustands (A1; A2; DF1; DF2),
wobei die schwächer getriebenen zwei Buszustände (A1, A2) zu Arbitrationszwecken von anderen Teilnehmerstationen (10; 20; 30) des seriellen Kommunikationsnetzwerks (1) überschreibbar sind, und
wobei die Sendestufe (220) ausgestaltet ist, mindestens einen Buszustand (A1; A2) der schwächer zu treibenden zwei Buszustände (A1, A2) in der ersten Betriebsart zu erzeugen oder mindestens einen Buszustand (A1; A2) der schwächer zu treibenden zwei Buszustände (A1, A2) in der ersten Betriebsart und in der zweiten Betriebsart zu erzeugen.

2. Teilnehmerstation (20; 30) nach Anspruch 1, wobei die Sendestufe (220) ausgestaltet ist, in die erste Betriebsart zu schalten, wenn von der Nachricht (5) Daten einer ersten Phase (456; 451; 452) zu senden sind, die mit einer ersten Bitrate zu senden sind, und in die zweite Betriebsart zu schalten, wenn von der Nachricht (5) Daten einer zweiten Phase (453; 454; 455) zu senden sind, die mit einer zweiten Bitrate zu senden ist, die schneller als die erste Bitrate ist.

3. Teilnehmerstation (20; 30) nach Anspruch 1 oder 2, wobei die Sendestufe (220) ausgestaltet ist, nur in die zweite Betriebsart zum Senden von Daten zu schalten, wenn für die Teilnehmerstation (20; 30) für eine vorbestimmte Zeit ein exklusiver, kollisionsfreier Zugriff auf die Busleitung (3) des Bussystems (1) gewährleistet ist.

4. Teilnehmerstation (20; 30) nach einem der vorangehenden Ansprüche, wobei die Sendestufe (220) aufweist
eine erste Endstufe (225), die zwischen einen Anschluss (223) für eine Spannungsversorgung und eine erste Busleitung (41) geschaltet ist,
eine zweite Endstufe (226), die zwischen eine zweite Busleitung (42) und einen Anschluss (224) für Masse geschaltet ist,
eine dritte Endstufe (227), die zwischen die erste Busleitung (41) und einen Anschluss (224) für Masse geschaltet ist,
eine vierte Endstufe (228), die zwischen den Anschluss (223) für die Spannungsversorgung und die zweite Busleitung (42) geschaltet ist, und
eine Schalteinrichtung (229) zum aktiv Schalten nur der ersten und zweiten Endstufe (225, 226) oder zum aktiv Schalten der ersten bis vierten Endstufe (225 bis 228).

5. Teilnehmerstation (20; 30) nach Anspruch 4,
wobei die erste und vierte Endstufe (225, 228) einen PMOS-Transistor aufweisen, und
wobei die zweite und dritte Endstufe (226, 227) einen NMOS-Transistor aufweisen.

6. Teilnehmerstation (20; 30) nach Anspruch 4 oder 5, wobei die Sendestufe (220) ausgestaltet ist, für die erste Betriebsart nur die erste und zweite Endstufe (225, 226) aktiv zu schalten, und für die zweite Betriebsart die erste und zweite Endstufe (225, 226) abwechselnd zu der dritten und vierten Endstufe (227, 228) aktiv zu schalten.

7. Teilnehmerstation (20; 30) nach einem der Ansprüche 4 bis 6,
wobei die Sendestufe (220) einen Anschluss (211) für ein Sendesignal TxD einer Kommunikationssteuereinrichtung (21; 31) der Teilnehmerstation (20; 30) aufweist, und
wobei die Schalteinrichtung aufweist
einen Schalter (229), der zwischen dem Anschluss (211) und der dritten Endstufe (227) angeschlossen ist, um das Sendesignal TxD auf einen Gateanschluss eines Transistors der dritten Endstufe (227) zu schalten oder von dem Gateanschluss zu trennen, und
einen Schalter (229), der zwischen dem Anschluss (211) und der vierten Endstufe (228) angeschlossen ist, um das Sendesignal TxD auf einen Gateanschluss eines Transistors der vierten Endstufe (228) zu schalten oder von dem Gateanschluss zu trennen.

8. Teilnehmerstation (20; 30) nach einem der vorangehenden Ansprüche, wobei die Nachricht (5) ein Datenfeld (454) mit einer variablen Länge aufweist, wobei die variable Länge zwischen 1 Byte bis 4096 Bytes beträgt.

9. Teilnehmerstation (20; 30) nach einem der vorangehenden Ansprüche, wobei die Sendestufe (220) ausgestaltet ist, die Buspegel in der ersten Betriebsart mit einem ersten Buslastwiderstand (43, 230) zu erzeugen und die Buspegel in der zweiten Betriebsart mit einem zweiten Buslastwiderstand (43) zu erzeugen, wobei der erste Buslastwiderstand kleiner als der zweite Buslastwiderstand ist.

10. Teilnehmerstation (20; 30) nach einem der vorangehenden Ansprüche, wobei die Sendestufe (220) ausgestaltet ist, *in der zweiten Betriebsart* mehr als vier unterschiedliche Buszustände zu treiben, *um ein Datenfeld (454) der Nachricht (4; 5) zu senden.*

11. *Teilnehmerstation (20; 30) nach einem der vorangehenden Ansprüche,*
*wobei die Sendestufe (220) ausgestaltet ist, in der zweiten Betriebsart mehr als vier unterschiedliche Buszustände zu treiben, um ein Datenfeld (454) der Nachricht (4; 5) und ein Steuerfeld (453) und ein Prüfsummenfeld (455) der Nachricht (4;5) zu senden,*
*wobei das Steuerfeld (453) vor dem Datenfeld (455) in der Nachricht (4; 5) angeordnet ist, und*
*wobei das Prüfsummenfeld (455) nach dem Datenfeld (455) in der Nachricht (4; 5) angeordnet ist.*

12. Bussystem (1), mit
einer parallelen Busleitung (3), und
mindestens zwei Teilnehmerstationen (10; 20; 30), welche über die Busleitung (3) derart miteinander verbunden sind, dass sie miteinander kommunizieren können,
wobei mindestens eine der mindestens zwei Teilnehmerstationen (10; 20; 30) eine Teilnehmerstation (20; 30) nach einem der vorangehenden Ansprüche ist.

13. Verfahren zum Senden einer Nachricht (5) in einem seriellen Bussystem (1), wobei das Verfahren den Schritt aufweist:
Senden, mit einer Sendestufe (220) einer Teilnehmerstation (20; 30) des Bussystems (1), einer Nachricht (4; 5) auf eine Busleitung (3) des Bussystems (1), wobei die Sendestufe (220) zwischen einer ersten Betriebsart und einer zweiten Betriebsart schaltet, um das Senden von verschiedenen Phasen einer Nachricht (4; 5) auszuführen,
wobei die Sendestufe (220) in der ersten Betriebsart einen ersten Datenzustand als Buszustand (A1; DF1; DF2) mit unterschiedlichen Buspegeln für zwei Busadern (41, 42) der Busleitung (3) erzeugt und einen zweiten Datenzustand als Buszustand (A2; A1; DF2) mit unterschiedlichen Buspegeln für die zwei Busadern (41, 42) der Busleitung (3) erzeugt,
wobei der Buszustand (A1; DF1; DF2) für den ersten Datenzustand eine Differenzspannung (U_D3; U_D2) mit anderer Amplitude zur Folge hat als der Buszustand (DF2; A2; A1) für den zweiten Datenzustand und/oder der Buszustand (A1; DF1; DF2) für den ersten Datenzustand eine positive Differenzspannung (U_D3; U_D2) und der Buszustand (A2; DF2) für den zweiten Datenzustand eine negative Differenzspannung (-U_D3; -U_D2) zur Folge haben, wobei die Sendestufe (220) in der zweiten Betriebsart einen dritten Datenzustand als Buszustand (DF1; DF2; A2) mit unterschiedlichen Buspegeln für die zwei Busadern (41, 42) der Busleitung (3) erzeugt und einen vierten Datenzustand als Buszustand (DF2; A2; A1) mit unterschiedlichen Buspegeln für zwei Busadern (41, 42) der Busleitung (3) erzeugt,
wobei der Buszustand (DF1) für den dritten Datenzustand eine positive Differenzspannung (U_D2) und der Buszustand (DF2) für den vierten Datenzustand eine negative Differenzspannung (-U_D2) zur Folge haben,
wobei die Sendestufe (220) jeweils zwei Buszustände (A1, A2; DF1, DF2) des ersten bis vierten Buszustands (A1; A2; DF1; DF2) symmetrisch zueinander erzeugt,
wobei die Sendestufe (220) zwei der zueinander symmetrisch zu erzeugenden Buszustände (A1, A2) des ersten bis vierten Buszustands (A1; A2; DF1; DF2) schwächer treibt als die zwei anderen zueinander symmetrisch zu erzeugenden Buszustände (DF1; DF2) des ersten bis vierten Buszustands (A1; A2; DF1; DF2),
wobei die schwächer getriebenen zwei Buszustände (A1, A2) zu Arbitrationszwecken von anderen Teilnehmerstationen (10; 20; 30) des seriellen Kommunikationsnetzwerks (1) überschreibbar sind, und
wobei die Sendestufe (220) mindestens einen Buszustand (A1; A2) der schwächer zu treibenden zwei Buszustände (A1, A2) in der ersten Betriebsart erzeugt oder mindestens einen Buszustand (A1; A2) der schwächer zu treibenden zwei Buszustände (A1, A2) in der ersten Betriebsart und in der zweiten Betriebsart erzeugt.

## Claims

1. Subscriber station (10; 20; 30) for a serial communication network (1), having a transmission stage (220) for transmitting a message (4; 5) to a bus line (3) of the bus system (1), the transmission stage (220) being configured to switch between a first mode and a second mode for transmitting different phases of a message (4; 5),
wherein in the first mode the transmission stage (220) is configured to generate a first data state as a bus state (A1; DF1; DF2) with different bus levels for two bus wires (41, 42) of the bus line (3) and to generate a second data state as a bus state (A2; A2; A1) with different bus levels for the two bus wires (41, 42) of the bus line (3),
wherein the bus state (A1; DF1; DF2) for the first data state results in a difference voltage (U_D3; U_D2) with a different amplitude than the bus state (DF2; A2; A1) for the second data state and/or the bus state (A1; DF1; DF2) for the first data state results in a positive difference voltage (U_D3; U_D2) and the bus state (A2; DF2) for the second data state results in a negative difference voltage (-U_D3; -U_D2),
wherein in the second mode the transmission stage (220) is configured to generate a third data state as a bus state (DF1; DF2; A2) with different bus levels for the two bus wires (41, 42) of the bus line (3) and to generate a fourth data state as a bus state (DF2; A2; A1) with different bus levels for the two bus wires (41, 42) of the bus line (3),
wherein the bus state (DF1) for the third data state results in a positive difference voltage (U_D2) and the bus state (DF2) for the fourth data state results in a negative difference voltage (-U_D2),
wherein the transmission stage (220) is configured to generate each pair of bus states (A1, A2; DF1, DF2) of the first to fourth bus states (A1; A2; DF1; DF2) symmetrically with respect to one another,
wherein the transmission stage (220) is configured to drive two of the symmetrically generable bus states (A1, A2) of the first to fourth bus states (A1; A2; DF1; DF2) at a lower level than the other two symmetrically generable bus states (DF1; DF2) of the first to fourth bus states (A1; A2; DF1; DF2), wherein the two bus states (A1, A2) driven at a lower level are overwritable for arbitration purposes by other subscriber stations (10; 20; 30) of the serial communication network (1), and
wherein the transmission stage (220) is configured to generate at least one bus state (A1; A2) of the two bus states (A1, A2) to be driven at a lower level in the first mode or to generate at least one bus state (A1; A2) of the two bus states (A1, A2) to be driven at a lower level in the first mode and in the second mode.

2. Subscriber station (20; 30) according to Claim 1, wherein the transmission stage (220) is configured to switch to the first mode when the message (5) is intended to transmit data of a first phase (456; 451; 452) that are intended to be transmitted at a first bit rate, and to switch to the second mode when the message (5) is intended to transmit data of a second phase (453; 454; 455) that is intended to be transmitted at a second bit rate, which is faster than the first bit rate.

3. Subscriber station (20; 30) according to Claim 1 or 2, wherein the transmission stage (220) is configured to switch to the second mode for transmitting data only if exclusive, collision-free access to the bus line (3) of the bus system (1) is guaranteed for the subscriber station (20; 30) for a predetermined time.

4. Subscriber station (20; 30) according to one of the preceding claims, wherein the transmission stage (220) has
a first output stage (225) connected between a connection (223) for a power supply and a first bus line (41),
a second output stage (226) connected between a second bus line (42) and a connection (224) for earth,
a third output stage (227) connected between the first bus line (41) and a connection (224) for earth,
a fourth output stage (228) connected between the connection (223) for the power supply and the second bus line (42), and
a switching device (229) for actively switching only the first and second output stages (225, 226) or for actively switching the first to fourth output stages (225 to 228).

5. Subscriber station (20; 30) according to Claim 4,
wherein the first and fourth output stages (225, 228) have a PMOS transistor, and
wherein the second and third output stages (226, 227) have an NMOS transistor.

6. Subscriber station (20; 30) according to Claim 4 or 5, wherein the transmission stage (220) is configured to activate only the first and second output stages (225, 226) for the first mode and to activate the first and second output stages (225, 226) alternately with the third and fourth output stages (227, 228) for the second mode.

7. Subscriber station (20; 30) according to one of Claims 4 to 6,
wherein the transmission stage (220) has a connection (211) for a transmission signal TxD of a communication control device (21; 31) of the subscriber station (20; 30), and
wherein the switching device has
a switch (229) connected between the connection (211) and the third output stage (227) to connect the transmission signal TxD to a gate connection of a transistor of the third output stage (227) or to disconnect said transmission signal from the gate connection, and
a switch (229) connected between the connection (211) and the fourth output stage (228) to connect the transmission signal TxD to a gate connection of a transistor of the fourth output stage (228) or to disconnect said transmission signal from the gate connection.

8. Subscriber station (20; 30) according to one of the preceding claims, wherein the message (5) has a data field (454) having a variable length, the variable length being between 1 byte and 4096 bytes.

9. Subscriber station (20; 30) according to one of the preceding claims, wherein the transmission stage (220) is configured to generate the bus levels using a first bus load resistor (43, 230) in the first mode and to generate the bus levels using a second bus load resistor (43) in the second mode, the first bus load resistor being smaller than the second bus load resistor.

10. Subscriber station (20; 30) according to one of the preceding claims, wherein the transmission stage (220) is configured to drive more than four different bus states in the second mode in order to transmit a data field (454) of the message (4; 5).

11. Subscriber station (20; 30) according to one of the preceding claims,
wherein the transmission stage (220) is configured to drive more than four different bus states in the second mode in order to transmit a data field (454) of the message (4; 5) and a control field (453) and a checksum field (455) of the message (4; 5),
wherein the control field (453) is arranged before the data field (455) in the message (4; 5), and
wherein the checksum field (455) is arranged after the data field (455) in the message (4; 5).

12. Bus system (1) having
a parallel bus line (3) and
at least two subscriber stations (10; 20; 30) connected to one another via the bus line (3) in such a way that they can communicate with one another,
at least one of the at least two subscriber stations (10; 20; 30) being a subscriber station (20; 30) according to one of the preceding claims.

13. Method for transmitting a message (5) in a serial bus system (1), the method comprising the step of:
transmitting, using a transmission stage (220) of a subscriber station (20; 30) of the bus system (1), a message (4; 5) to a bus line (3) of the bus system (1), the transmission stage (220) switching between a first mode and a second mode in order to transmit different phases of a message (4; 5),
wherein in the first mode the transmission stage (220) generates a first data state as a bus state (A1; DF1; DF2) with different bus levels for two bus wires (41, 42) of the bus line (3) and generates a second data state as a bus state (A2; A1; DF2) with different bus levels for the two bus wires (41, 42) of the bus line (3),
wherein the bus state (A1; DF1; DF2) for the first data state results in a difference voltage (U_D3; U_D2) with a different amplitude than the bus state (DF2; A2; A1) for the second data state and/or the bus state (A1; DF1; DF2) for the first data state results in a positive difference voltage (U_D3; U_D2) and the bus state (A2; DF2) for the second data state results in a negative difference voltage (-U_D3; -U_D2), wherein in the second mode the transmission stage (220) generates a third data state as a bus state (DF1; DF2; A2) with different bus levels for the two bus wires (41, 42) of the bus line (3) and
generates a fourth data state as a bus state (DF2; A2; A1) with different bus levels for the two bus wires (41, 42) of the bus line (3),
wherein the bus state (DF1) for the third data state results in a positive difference voltage (U_D2) and the bus state (DF2) for the fourth data state results in a negative difference voltage (-U_D2),
wherein the transmission stage (220) generates each pair of bus states (A1, A2; DF1, DF2) of the first to fourth bus states (A1; A2; DF1; DF2) symmetrically with respect to one another,
wherein the transmission stage (220) drives two of the symmetrically generable bus states (A1, A2) of the first to fourth bus states (A1; A2; DF1; DF2) at a lower level than the other two symmetrically generable bus states (DF1; DF2) of the first to fourth bus states (A1; A2; DF1; DF2),
wherein the two bus states (A1, A2) driven at a lower level are overwritable for arbitration purposes by other subscriber stations (10; 20; 30) of the serial communication network (1), and
wherein the transmission stage (220) generates at least one bus state (A1; A2) of the two bus states (A1, A2) to be driven at a lower level in the first mode or generates at least one bus state (A1; A2) of the two bus states (A1, A2) to be driven at a lower level in the first mode and in the second mode.

## Revendications

1. Station d'abonné (10 ; 20 ; 30) pour un réseau de communication en série (1), avec
un étage d'envoi (220) pour envoyer un message (4 ; 5) sur une ligne de bus (3) du système de bus (1), l'étage d'envoi (220) étant configuré pour commuter entre un premier mode de fonctionnement et un deuxième mode de fonctionnement lors de l'envoi de différentes phases d'un message (4 ; 5),
l'étage d'envoi (220) étant configuré dans le premier mode de fonctionnement pour générer un premier état de données comme état de bus (A1 ; DF1 ; DF2) avec différents niveaux de bus pour deux fils de bus (41, 42) de la ligne de bus (3), et pour générer un deuxième état de données comme état de bus (A2 ; A2 ; A1) avec différents niveaux de bus pour les deux fils de bus (41, 42) de la ligne de bus (3),
l'état de bus (A1 ; DF1 ; DF2) pour le premier état de données entraînant une tension différentielle (U_D3 ; U_D2) d'amplitude autre que l'état de bus (DF2 ; A2 ; A1) pour le deuxième état de données et/ou l'état de bus (A1 ; DF1 ; DF2) pour le premier état de données entraînant une tension différentielle positive (U_D3 ; U_D2) et l'état de bus (A2 ; DF2) pour le deuxième état de données entraînant une tension différentielle négative (-U_D3 ; -U_D2), l'étage d'envoi (220) étant configuré dans le premier mode de fonctionnement pour générer un troisième état de données comme état de bus (DF1 ; DF2 ; A2) avec différents niveaux de bus pour deux fils de bus (41, 42) de la ligne de bus (3), et pour générer un quatrième état de données comme état de bus (DF2 ; A2 ; A1) avec différents niveaux de bus pour les deux fils de bus (41, 42) de la ligne de bus (3),
l'état de bus (DF1) pour le troisième état de données entraînant une tension différentielle positive (U_D2) et l'état de bus (DF2) pour le quatrième état de données entraînant une tension différentielle négative (-U_D2),
l'étage d'envoi (220) étant configuré pour générer respectivement deux états de bus (A1, A2 ; DF1, DF2) du premier au quatrième état de bus (A1 ; A2 ; DF1 ; DF2) symétriquement l'un par rapport à l'autre,
l'étage d'envoi (220) étant configuré pour commander deux des états de bus (A1, A2) du premier au quatrième état de bus (A1 ; A2 ; DF1 ; DF2) à générer symétriquement l'un par rapport à l'autre plus faiblement que les deux autres états de bus (DF1 ; DF2) du premier au quatrième état de bus (A1 ; A2 ; DF1 ; DF2) à générer symétriquement l'un par rapport à l'autre,
les deux états de bus (A1, A2) entraînés plus faiblement pouvant être écrasés par d'autres stations d'abonnés (10 ; 20 ; 30) du réseau de communication en série (1) à des fins d'arbitrage, et
l'étage d'envoi (220) étant configuré pour générer au moins un état de bus (A1 ; A2) des deux états de bus (A1, A2) à entraîner plus faiblement dans le premier mode de fonctionnement ou pour générer au moins un état de bus (A1 ; A2) des deux états de bus (A1, A2) à commander plus faiblement dans le premier mode de fonctionnement et dans le deuxième mode de fonctionnement.

2. Station d'abonné (20 ; 30) selon la revendication 1, l'étage d'envoi (220) étant configuré pour commuter dans le premier mode de fonctionnement lorsque des données d'une première phase (456 ; 451 ; 452) sont à envoyer par le message (5), laquelle est à envoyer avec un premier débit binaire, et pour commuter dans le deuxième mode de fonctionnement lorsque des données d'une deuxième phase (453 ; 454 ; 455) sont à envoyer par le message (5), laquelle est à envoyer à un deuxième débit binaire, qui est plus rapide que le premier débit binaire.

3. Station d'abonné (20 ; 30) selon la revendication 1 ou 2, l'étage d'envoi (220) étant configuré pour commuter dans le deuxième mode de fonctionnement pour envoyer des données seulement lorsqu'un accès exclusif et sans collision à la ligne de bus (3) du système de bus (1) est assuré pour la station d'abonné (20 ; 30) pendant une durée prédéfinie.

4. Station d'abonné (20 ; 30) selon l'une des revendications précédentes, l'étage d'envoi (220) comportant
un premier étage de sortie (225), qui est branché entre une borne (223) pour une alimentation en tension et une première ligne de bus (41),
un deuxième étage de sortie (226), qui est branché entre une deuxième ligne de bus (42) et une borne (224) de masse,
un troisième étage de sortie (227), qui est branché entre la première ligne de bus (41) et une borne (224) de masse,
un quatrième étage de sortie (228), qui est branché entre la borne (223) pour l'alimentation en tension et la deuxième ligne de bus (42), et
un dispositif de commutation (229) destiné à commuter activement uniquement le premier et le deuxième étage de sortie (225, 226) ou destiné à commuter activement le premier au quatrième étage de sortie (225 à 228).

5. Station d'abonné (20 ; 30) selon la revendication 4,
le premier et le quatrième étage de sortie (225, 228) comportant un transistor PMOS, et
le deuxième et le troisième étage de sortie (226, 227) comportant un transistor NMOS.

6. Station d'abonné (20 ; 30) selon la revendication 4 ou 5, l'étage d'envoi (220) étant configuré pour commuter activement seulement le premier et le deuxième étage de sortie (225, 226) pour le premier mode de fonctionnement, et pour commuter activement le premier et le deuxième étage de sortie (225, 226) alternativement par rapport au troisième et au quatrième étage de sortie (227, 228) pour le deuxième mode de fonctionnement.

7. Station d'abonné (20 ; 30) selon l'une des revendications 4 à 6,
l'étage d'envoi (220) comportant une borne (211) pour un signal d'envoi TxD d'un dispositif de commande de communication (21 ; 31) de la station d'abonné (20 ; 30), et
le dispositif de commutation comportant
un commutateur (229), qui est connecté entre la borne (211) et le troisième étage de sortie (227) pour commuter le signal d'envoi TxD sur une borne de grille d'un transistor du troisième étage de sortie (227) ou le déconnecter de la borne de grille, et
un commutateur (229), qui est connecté entre la borne (211) et le quatrième étage de sortie (228) pour commuter le signal d'envoi TxD sur une borne de grille d'un transistor du quatrième étage de sortie (228) ou le déconnecter de la borne de grille.

8. Station d'abonné (20 ; 30) selon l'une des revendications précédentes, le message (5) comportant un champ de données (454) avec une longueur variable, la longueur variable étant comprise entre 1 et 4096 octets.

9. Station d'abonné (20 ; 30) selon l'une des revendications précédentes, l'étage d'envoi (220) étant configuré pour générer les niveaux de bus dans le premier mode de fonctionnement avec une première résistance de charge de bus (43, 230) et pour générer les niveaux de bus dans le deuxième mode de fonctionnement avec une deuxième résistance de charge de bus (43), la première résistance de charge de bus étant plus petite que la deuxième résistance de charge de bus.

10. Station d'abonné (20 ; 30) selon l'une des revendications précédentes, l'étage d'envoi (220) étant configuré pour entraîner plus de quatre états de bus différents dans le deuxième mode de fonctionnement pour envoyer un champ de données (454) du message (4 ; 5).

11. Station d'abonné (20 ; 30) selon l'une des revendications précédentes, l'étage d'envoi (220) étant configuré pour entraîner plus de quatre états de bus différents dans le deuxième mode de fonctionnement pour envoyer un champ de données (454) du message (4 ; 5) et un champ de commande (453) et un champ de somme de contrôle (455) du message (4 ; 5),
le champ de commande (453) étant disposé devant le champ de données (455) dans le message (4 ; 5), et
le champ de somme de contrôle (455) étant disposé après le champ de données (455) dans le message (4 ; 5).

12. Système de bus (1), avec
une ligne de bus (3) parallèle, et
au moins deux stations d'abonnés (10 ; 20 ; 30), qui sont reliées entre elles par la ligne de bus (3) de manière à pouvoir communiquer entre elles,
au moins une des au moins deux stations d'abonnés (10 ; 20 ; 30) étant une station d'abonné (20 ; 30) selon l'une des revendications précédentes.

13. Procédé permettant d'envoyer un message (5) dans un système de bus série (1), le procédé comportant l'étape :
d'envoi d'un message (4 ; 5) sur une ligne de bus (3) du système de bus (1) avec un étage d'envoi (220) d'une station d'abonné (20 ; 30) du système de bus (1), l'étage d'envoi (220) commutant entre un premier mode de fonctionnement et un deuxième mode de fonctionnement pour exécuter l'envoi de différentes phases d'un message (4 ; 5),
l'étage d'envoi (220) générant, dans le premier mode de fonctionnement, un premier état de données comme état de bus (A1 ; DF1 ; DF2) avec différents niveaux de bus pour deux fils de bus (41, 42) de la ligne de bus (3), et générant un deuxième état de données comme état de bus (A2 ; A1 ; DF2) avec différents niveaux de bus pour les deux fils de bus (41, 42) de la ligne de bus (3),
l'état de bus (A1 ; DF1 ; DF2) pour le premier état de données entraînant une tension différentielle (U_D3 ; U_D2) d'amplitude autre que l'état de bus (DF2 ; A2 ; A1) pour le deuxième état de données et/ou l'état de bus (A1 ; DF1 ;
DF2) pour le premier état de données entraînant une tension différentielle positive (U_D3 ; U_D2) et l'état de bus (A2 ; DF2) pour le deuxième état de données entraînant une tension différentielle négative (-U_D3 ; -U_D2),
l'étage d'envoi (220) générant dans le deuxième mode de fonctionnement un troisième état de données comme état de bus (DF1 ; DF2 ; A2) avec différents niveaux de bus pour les deux fils de bus (41, 42) de la ligne de bus (3) et un quatrième état de données comme état de bus (DF2 ; A2 ; A1) avec différents niveaux de bus pour deux fils de bus (41, 42) de la ligne de bus (3),
l'état de bus (DF1) pour le troisième état de données entraînant une tension différentielle positive (U_D2) et l'état de bus (DF2) pour le quatrième état de données entraînant une tension différentielle négative (-U_D2),
l'étage d'envoi (220) générant respectivement deux états de bus (A1, A2 ; DF1, DF2) du premier au quatrième état de bus (A1 ; A2 ; DF1 ; DF2) symétriquement l'un par rapport à l'autre,
l'étage d'envoi (220) entraînant deux des états de bus (A1, A2) du premier au quatrième état de bus (A1 ; A2 ; DF1 ; DF2) à générer symétriquement l'un par rapport à l'autre plus faiblement que les deux autres états de bus (DF1 ; DF2) du premier au quatrième état de bus (A1 ; A2 ; DF1 ; DF2) à générer symétriquement l'un par rapport à l'autre,
les deux états de bus (A1, A2) entraînés plus faiblement pouvant être écrasés par d'autres stations d'abonnés (10 ; 20 ; 30) du réseau de communication en série (1) à des fins d'arbitrage, et
l'étage d'envoi (220) générant au moins un état de bus (A1 ; A2) des deux états de bus (A1, A2) à entraîner plus faiblement dans le premier mode de fonctionnement ou générant au moins un état de bus (A1 ; A2) des deux états de bus (A1, A2) à entraîner plus faiblement dans le premier mode de fonctionnement et dans le deuxième mode de fonctionnement.
